# EUROPEAN PATENT APPLICATION

(11) **EP 3 480 146 A1**
(43) Date of publication of application: **08.05.2019**
(21) Application number: 18211528.7
(22) Date of filing: 18.03.2013
(51) Int. Cl.: B65G 57/14, G06Q 10/06

(54) **SYSTEM OF DELIVERING AND STORING PROPPANT FOR USE AT A WELL SITE AND CONTAINER FOR SUCH PROPPANT**

(30) Priority: 22.03.2012 US 201213427140
(62) Divisional of application: 18190105.9
(71) Applicant: Oren Technologies, LLC, Houston, Texas 77073 (US)
(72) Inventor: OREN, John, Houston, Texas 77205 (US)
(74) Representative: LKGlobal UK Ltd.

(57) **Abstract**

Use of a container for proppant storage, the container comprising an opening adjacent a top (16) thereof to load proppant therein, an outlet adjacent a bottom (14) for discharge of proppant therefrom, a pair of spaced-apart end walls (22, 24) connected to and extending between the bottom (14) and the top (16), and a pair of side walls (18, 20) connected to and extending between the pair of end walls (22, 24) and the top (16) and the bottom (14). The container further comprises one or more supporting members (36) rigidly extending intermediate between, and rigidly affixed to, the pair of end walls (22, 24); one or more other supporting members (38, 40) rigidly extending intermediate between, and rigidly affixed to, the pair of side walls (18, 20); and a flow gate (28) positioned adjacent the outlet to control flow of proppant through the outlet and moveable between a closed position and an open position, and which may be movably received by guides (42).

## Description

### FIELD OF THE INVENTION

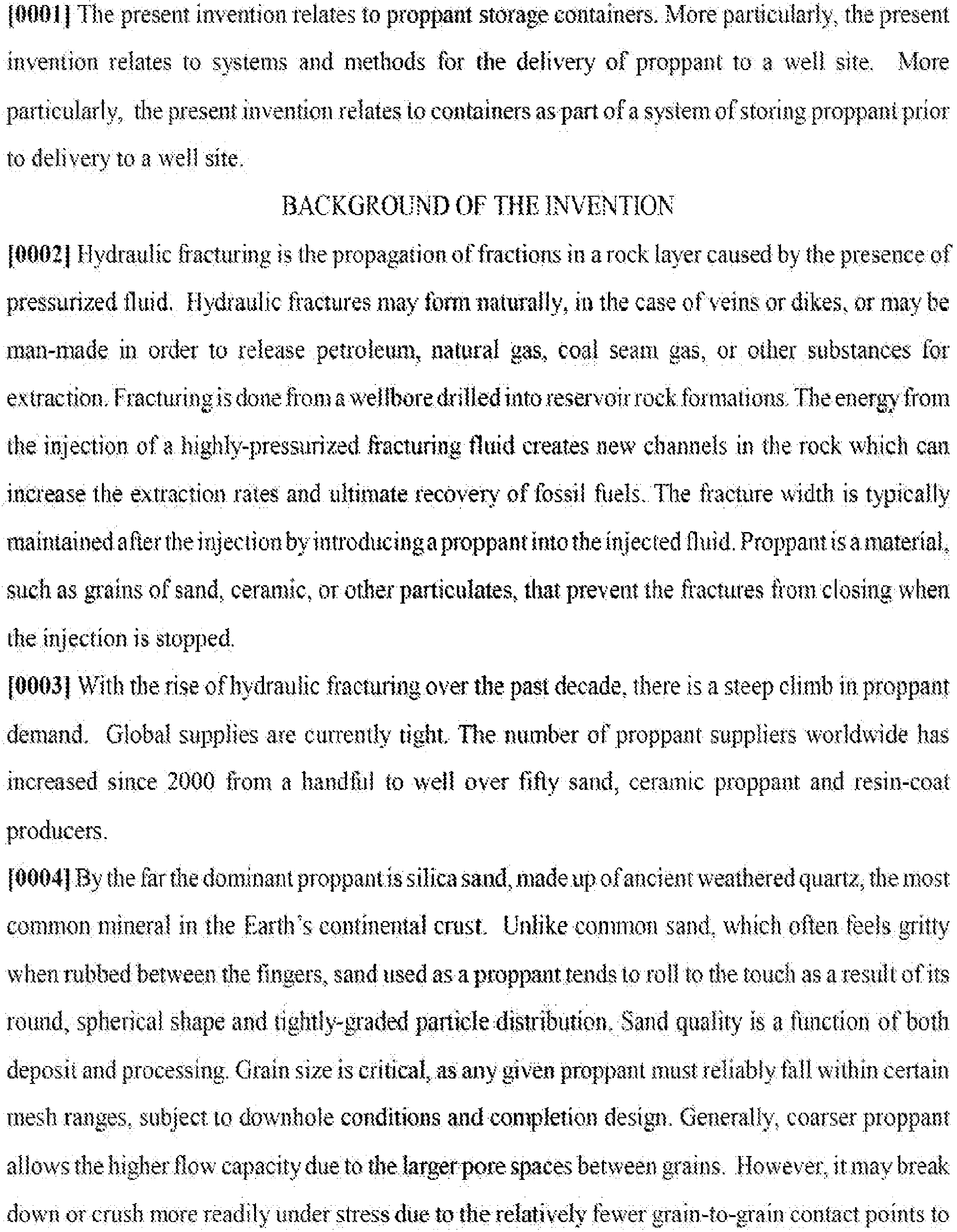

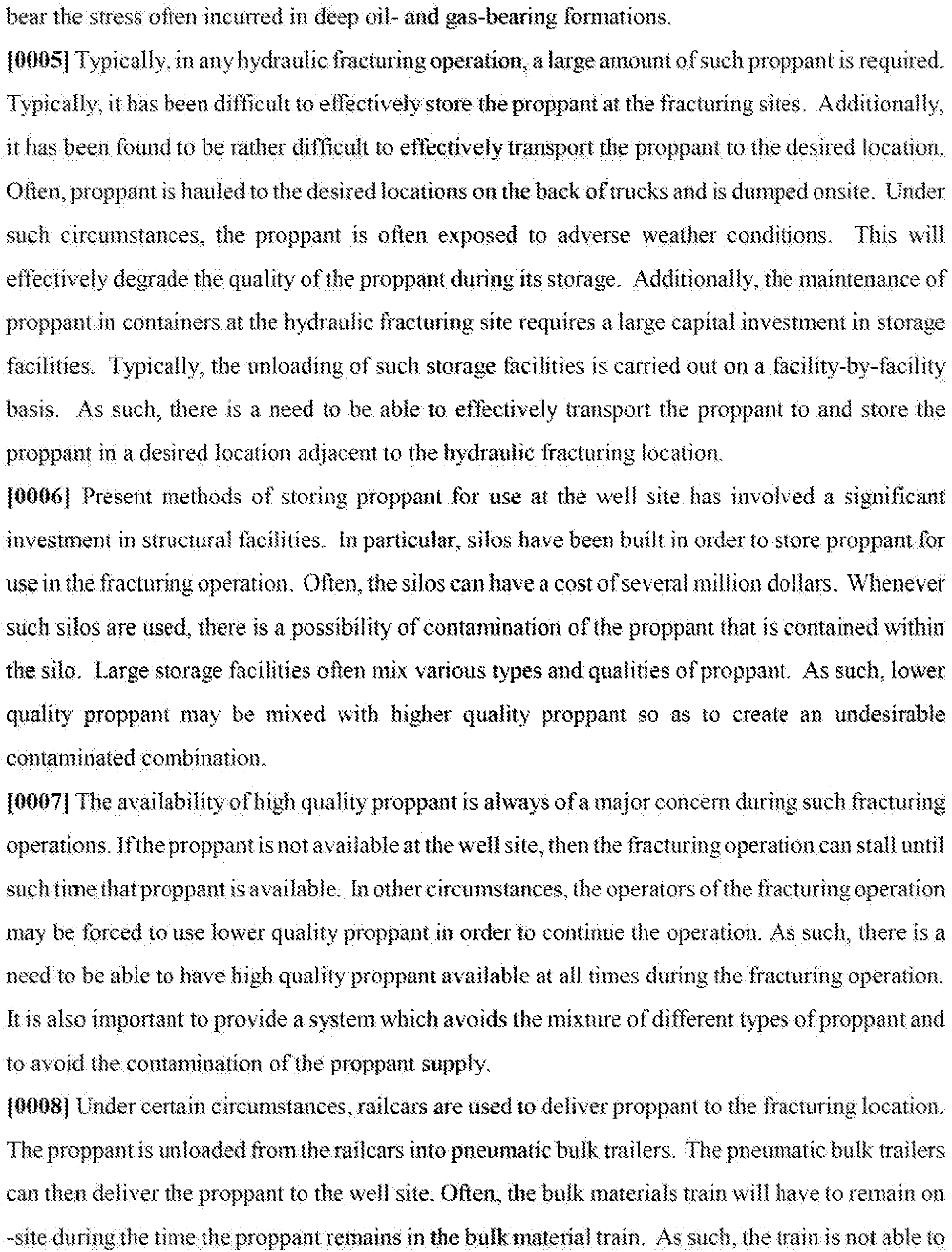

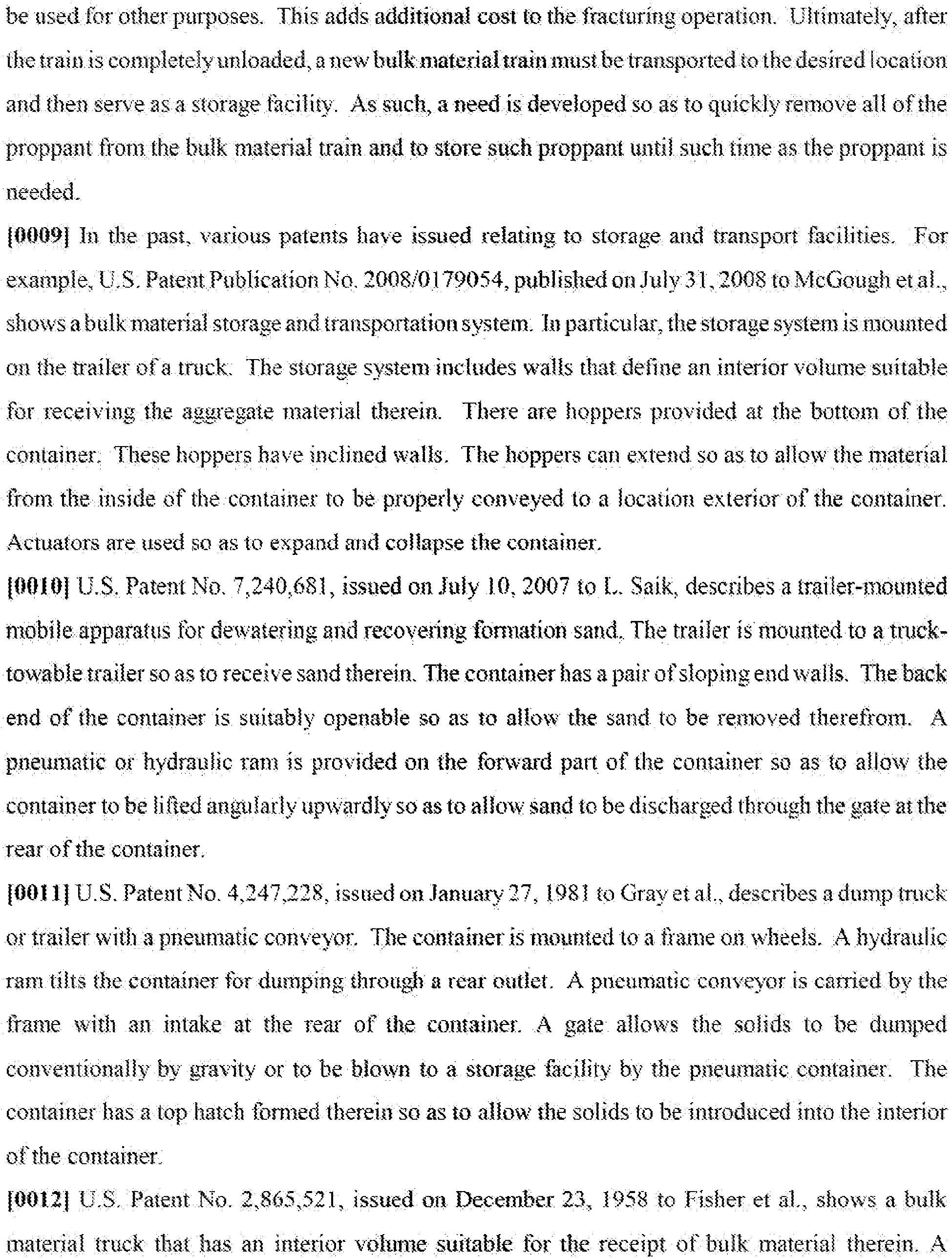

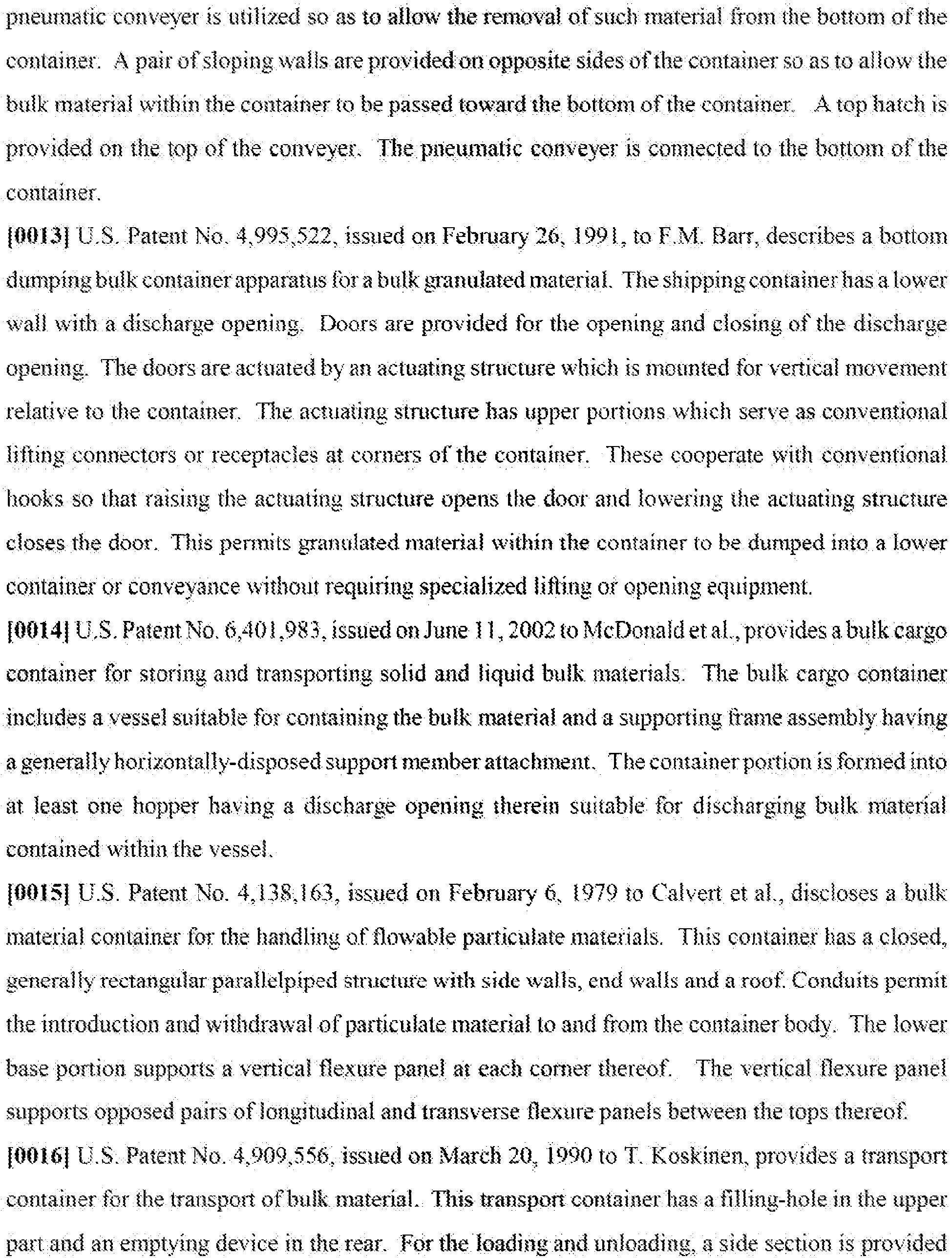

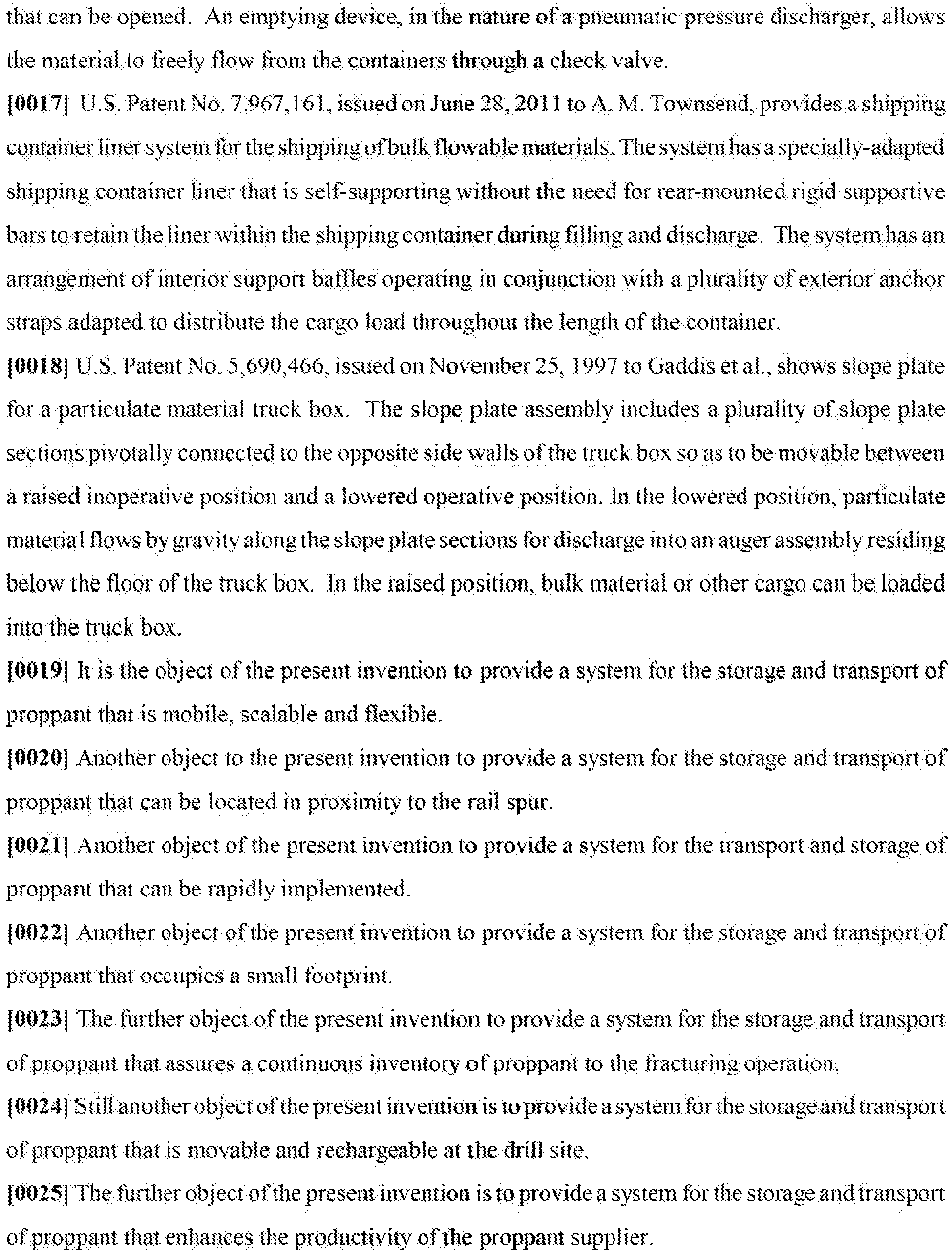

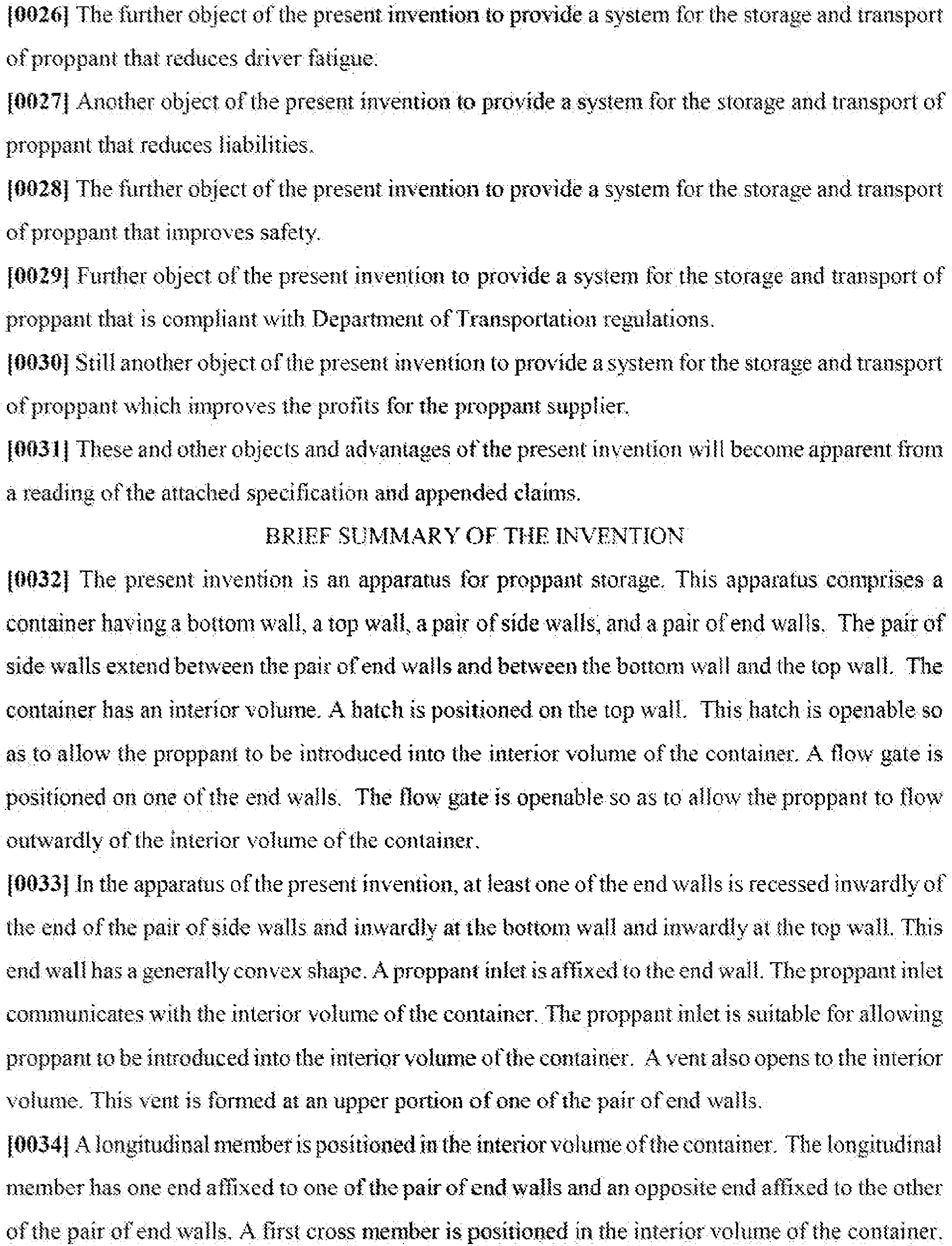

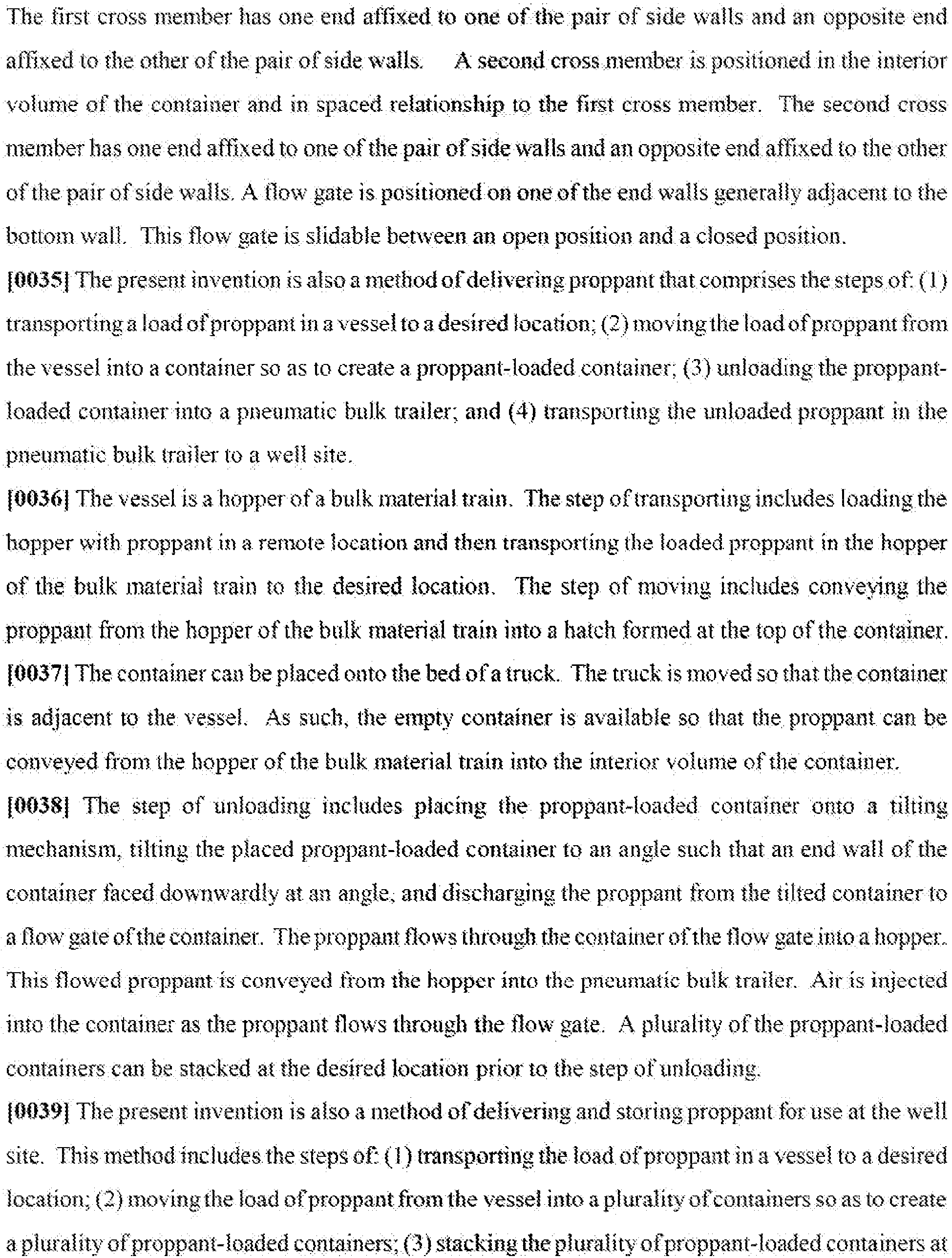

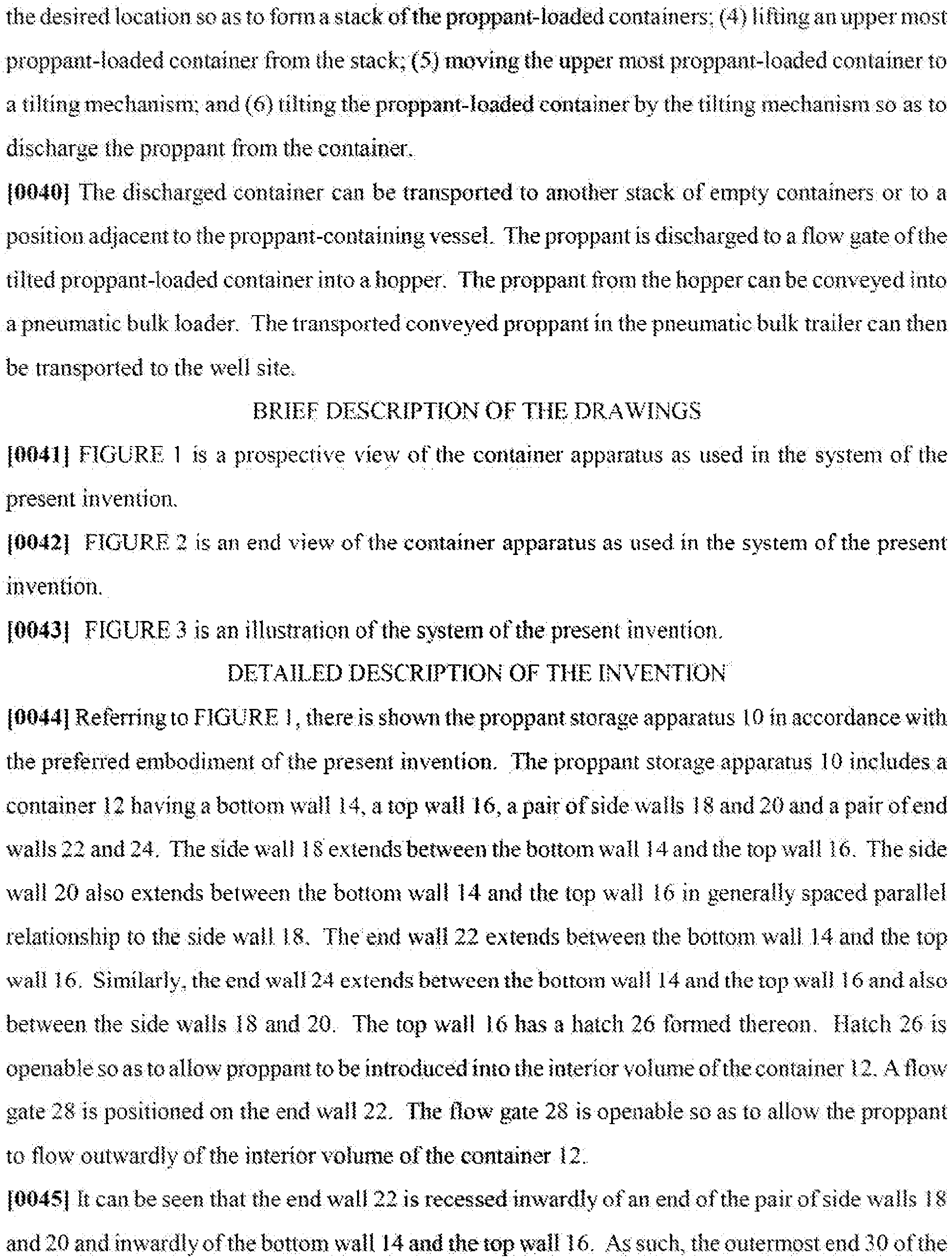

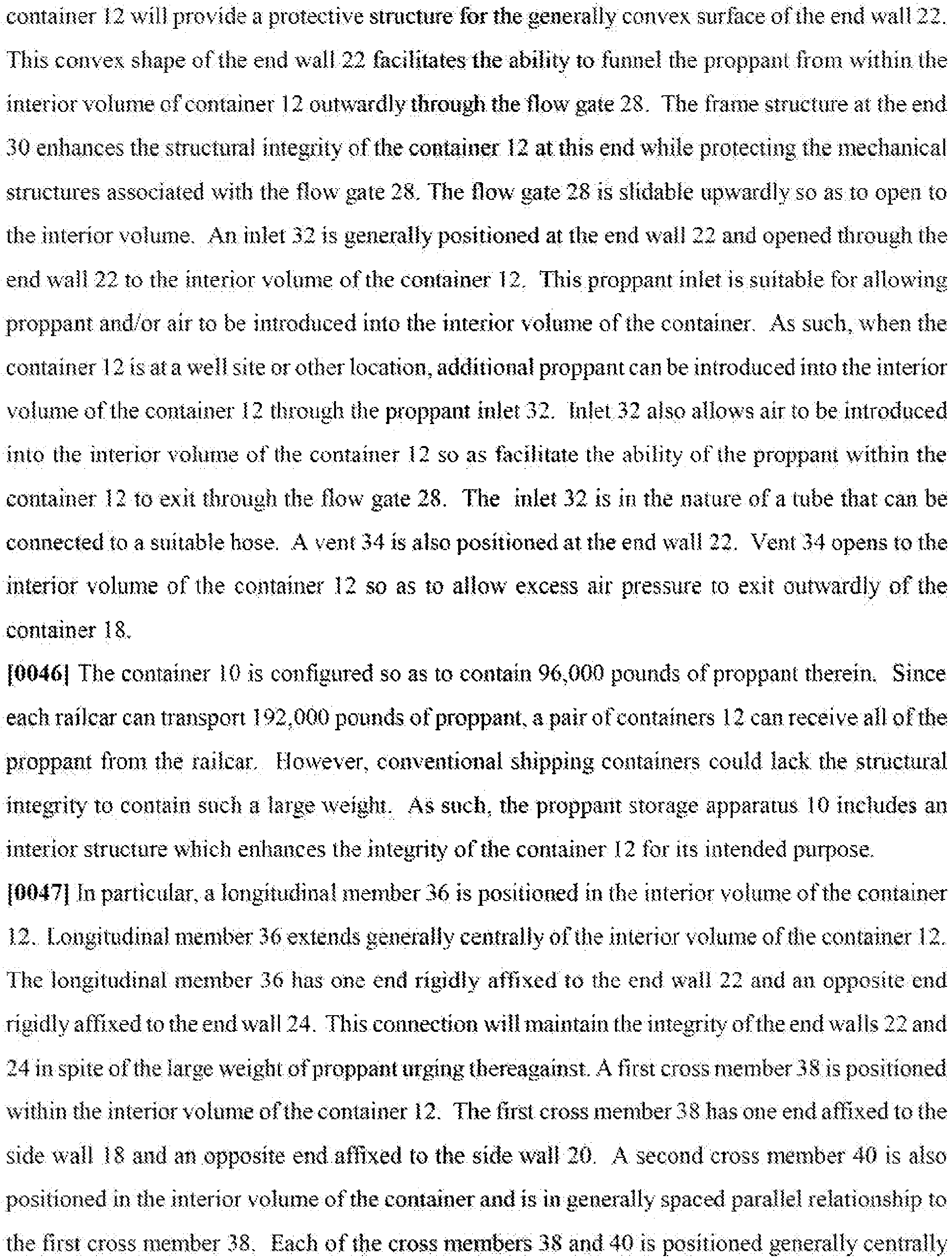

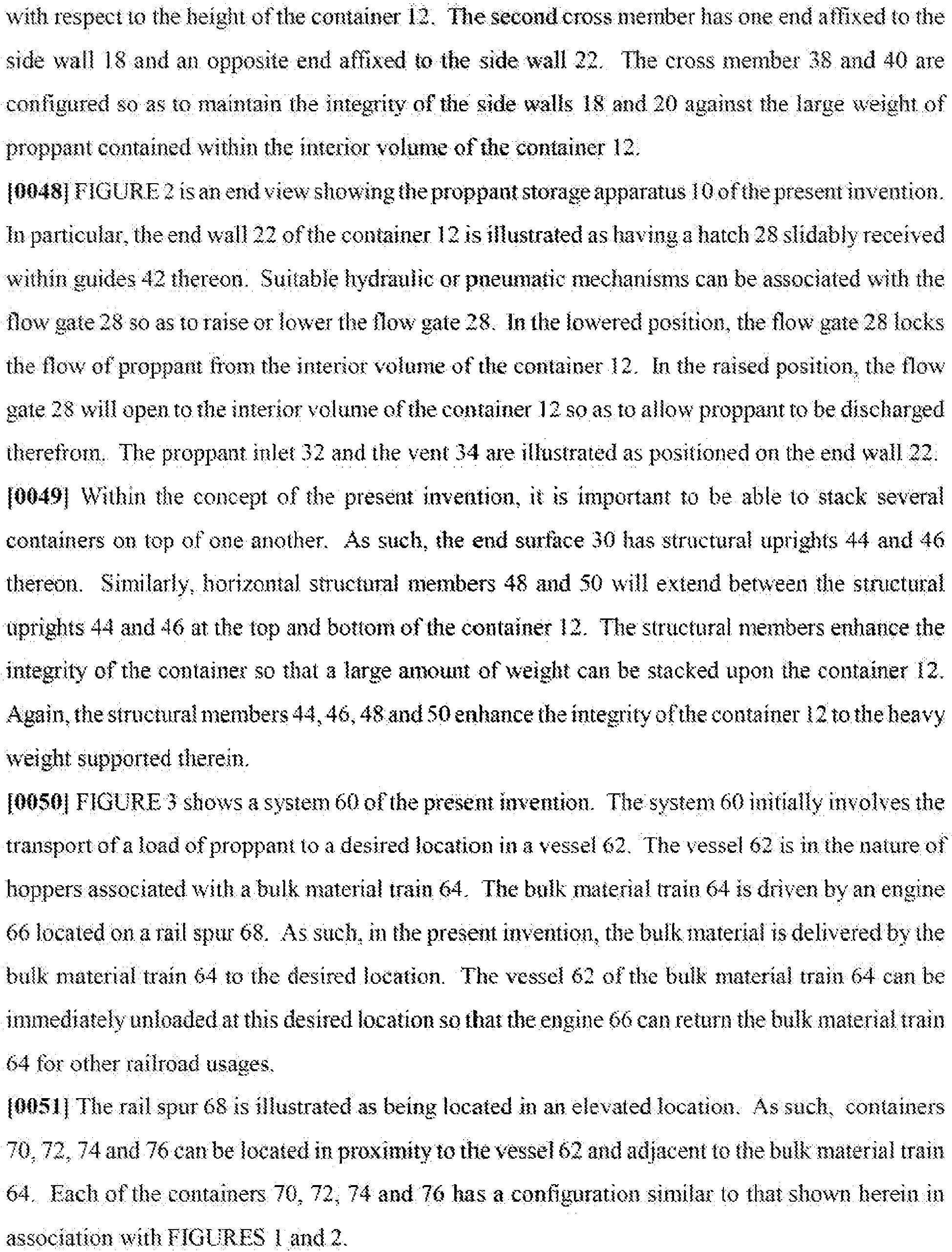

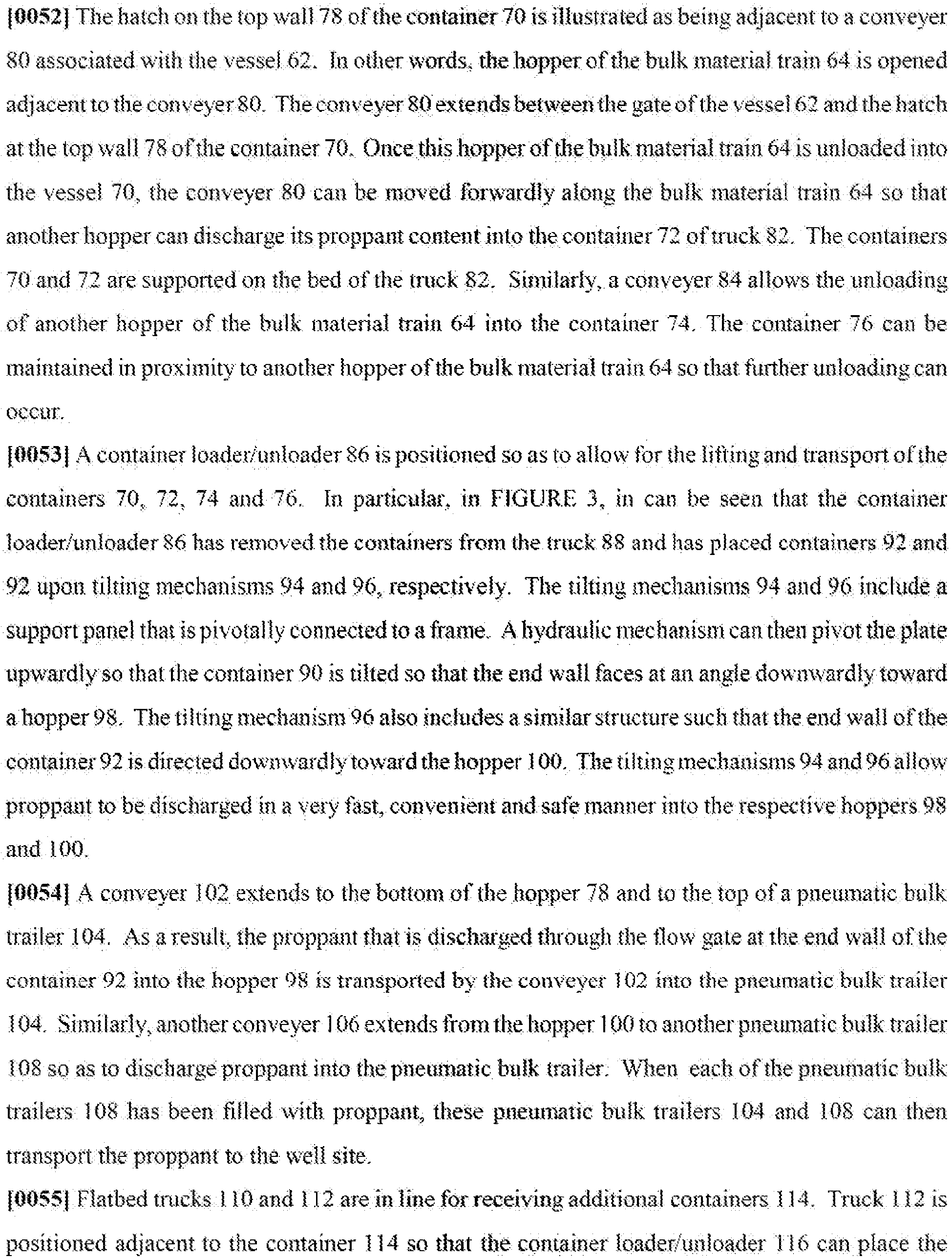

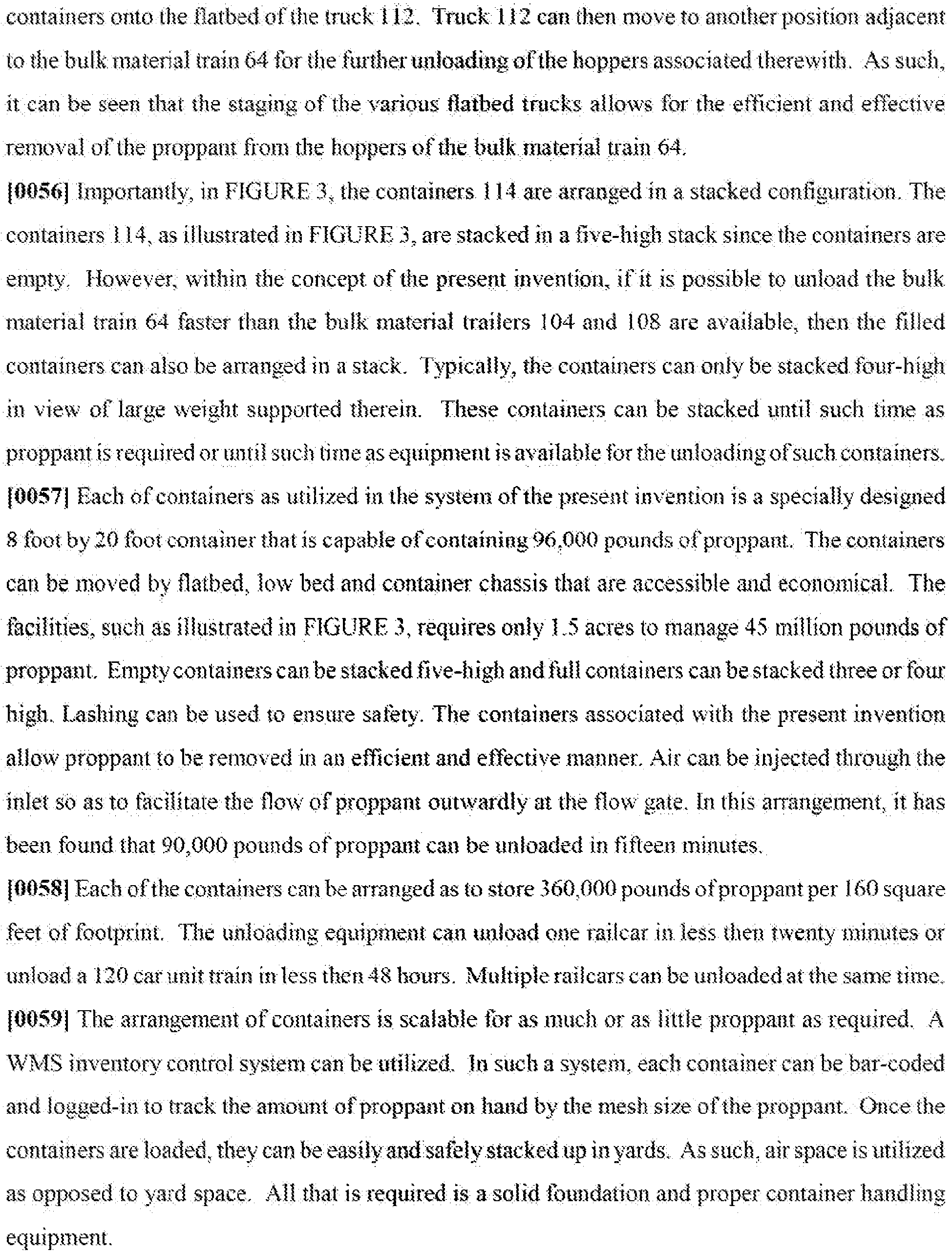

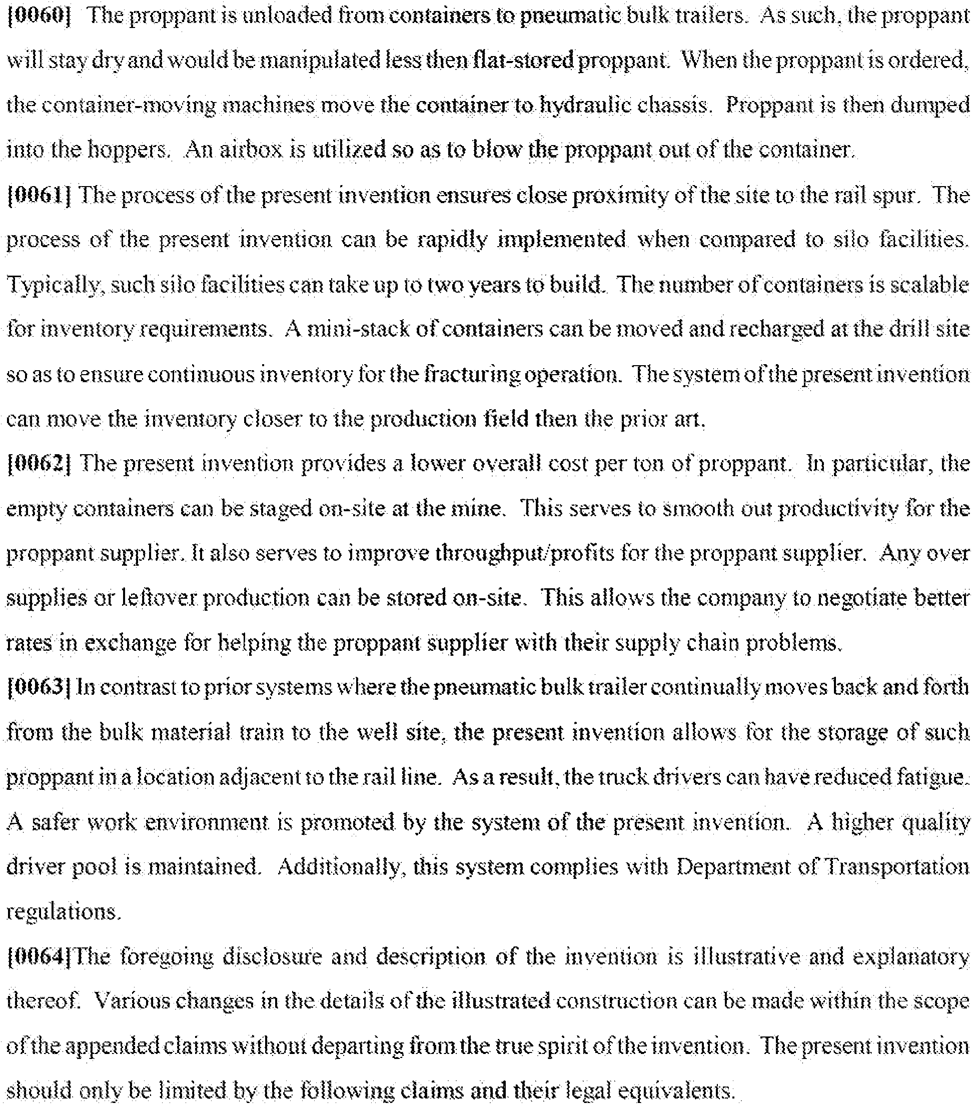

### CLAUSES:

1. An apparatus for proppant storage, the apparatus comprising: a container having a bottom wall and a top wall and a pair of side walls and a pair of end walls, said pair of side walls extending between said pair of end walls and between said bottom wall and said top wall, said container having an interior volume;
   a hatch positioned on said top wall, said hatch being openable to so as to allow the proppant to be introduced into said interior volume of said container; and
   a flow gate positioned on one of said of pair of end walls, said flow gate being openable so as to allow the proppant to flow outwardly of said interior volume of said container.
2. The apparatus of clause 1, said one of said pair of end walls being insert inwardly of an end of said pair of side walls and inwardly of said bottom wall and inwardly of said top wall.
3. The apparatus of clause 2, said one of said pair of end walls having a generally convex shape.
4. The apparatus of clause 1, further comprising: an inlet affixed to at least one of said pair of end walls, said inlet communicating with said interior volume of said container, said inlet suitable for allowing proppant or air to be introduced into said interior volume of said container.
5. The apparatus of clause 4, further comprising: a vent opening to said interior volume, said vent formed at an upper portion of said one of said pair of end walls.
6. The apparatus of clause 1, further comprising: a longitudinal member positioned in said interior volume of said container, said longitudinal member having one end affixed to one of said pair of end walls and an opposite end affixed to another of said pair of end walls.
7. The apparatus of clause 1, further comprising: a first cross member positioned in said interior volume of said container, said first cross member having one end affixed to one of said pair of side walls and an opposite end affixed to the other of said pair of side walls.
8. The apparatus of clause 7, further comprising: a second cross member positioned in said interior volume of said container and in spaced parallel relationship to said first cross member, said second cross member having one end affixed to the one of said pair of side walls and an opposite end affixed to the other of said pair of side walls.
9. The apparatus of clause 1, said flow gate positioned on said one of said end walls generally adjacent said bottom wall, said flow gate being slidable between a closed position and an opened position.
10. A method of delivering proppant comprising: transporting a load of proppant in a vessel to desired location; moving the load of proppant from said vessel into a container so as to create a proppant-loaded container; unloading the proppant-loaded container into a pneumatic bulk trailer; and transporting the unloaded proppant in said pneumatic bulk trailer to a well site.
11. The method of clause 10, said vessel being a hopper of a bulk material train, the step of transporting comprising: loading said hopper with proppant at a remote location; and transporting the loaded proppant in said hopper of said bulk material train to the desired location.
12. The method of clause 11, said step of moving comprising; conveying the proppant from said hopper into a hatch formed at the top of said container.
13. The method of clause 10, further comprising: placing said container onto the bed of a truck; and moving said truck such that said container is adjacent said vessel.
14. The method of clause 10, said step of unloading comprising: placing the proppant-loaded container onto a tilting mechanism; tilting the placed proppant loaded-container at an angle such that an end wall of the container faces downwardly at an angle; and discharging the proppant from the tilted container through a flow gate of the container.
15. The method of clause 14, the step of discharging comprising: flowing the proppant through said flow gate of said container into a hopper; and conveying the load of proppant from said hopper into the pneumatic bulk trailer.
16. The method of clause 15, the step of flowing comprising: injecting air into said container as the proppant flows through said flow gate.
17. The method of clause 10, further comprising: stacking a plurality of the proppant-loaded containers at the desired location prior to the step of unloading.
18. A method of delivering and storing proppant for use at a well site, the method comprising: transporting a load of proppant in a vessel to a desired location; moving the load of proppant from said vessel into a plurality of containers so as to create a plurality of proppant-loaded containers; stacking said plurality of proppant-loaded containers at the desired location so as to form a stack of proppant-loaded containers; lifting an uppermost proppant-loaded container from said stack; moving the uppermost proppant-loaded container to a tilting mechanism; and
   tilting the proppant-loaded container by the tilting mechanism so as to discharge the proppant from said container.
19. The method of clause 18, further comprising: transporting the discharged container to a stack of empty containers or to a position adjacent to the vessel.
20. The method of clause 18, further comprising: discharging the proppant to a flow gate of the tilted proppant-loaded container into a hopper; conveying the proppant from said hopper into a pneumatic bulk trailer; and transporting the conveyed proppant in said pneumatic bulk trailer to the well site.

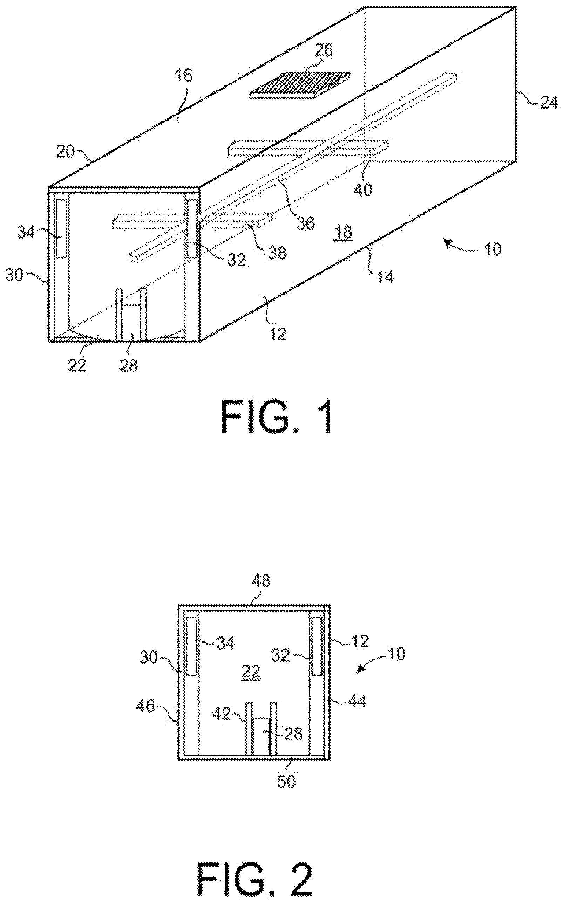

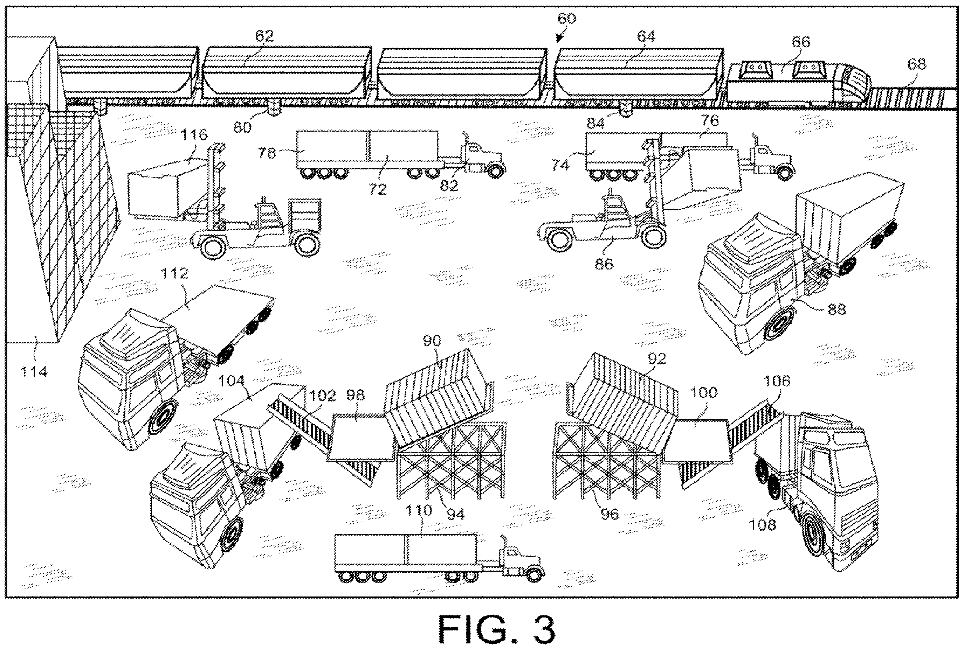

## Claims

**1.** A method of storing and moving proppant at a desired location, the method comprising:
a) storing proppant at the desired location in a plurality of containers (12) that each contain proppant and that are at the desired location, each container comprising:
an opening adjacent a top (16) thereof to load proppant therein,
an outlet adjacent a bottom (14) for discharge of proppant therefrom,
a pair of end walls (22, 24), each end wall (22, 24) extending between the bottom (14) and the top (16),
a pair of side walls (18, 20), each side wall (18, 20) extending between the pair of end walls (22, 24) and the top (16) and the bottom (14),
a longitudinal member having an end rigidly affixed to a first end wall (22) of the pair of end walls (22, 24) and an opposite end rigidly affixed to a second end wall (24) of the pair of end walls (22, 24) to provide a connection to maintain the integrity of the end walls (22, 24) in spite of the large weight of proppant urging thereagainst; and
a flow gate (28) positioned adjacent the outlet to control flow of proppant through the outlet, the flow gate being openable so as to allow the proppant to flow outwardly of the interior volume of the container through the outlet.

**2.** The method as claimed in claim 1, the method further comprising before a):
transporting a load of proppant in a vessel to the desired location; and
moving the load of proppant located at the desired location into the plurality of containers (12) so as to create the plurality of proppant-loaded containers (12).

**3.** The method as claimed in claim 2, wherein the step of moving further comprises discharging the proppant from said vessel to be positioned into the interior volume of the container (12).

**4.** The method as claimed in either of claims 2 or 3, wherein said vessel comprises one or more rail cars (62), and the method further comprises transporting the load of proppant to a location adjacent a rail line (68) within one or more rail cars (62).

**5.** The method as claimed in any preceding claim, the method further comprising after a):
b) transferring one or more of the plurality of containers (12) onto a trailer of a vehicle;
c) removing one or more proppant-loaded containers (12) of the plurality of containers (12) away from the plurality of containers (12); and
d) transporting the one or more proppant-loaded containers (12) on said vehicle trailer to a well site.

**6.** The method as claimed in any preceding claim, the container (12) including an inner surface shaped to funnel the proppant towards the outlet.

**7.** The method as claimed in any preceding claim, wherein the structural integrity of the container (12) is enhanced by supporting members including a plurality of structural uprights (44, 46) positioned on respective end surfaces (22) of the plurality of containers (12) and extending from the bottom (14) to the top (16) thereby increasing the weight carrying capacity of the containers (12) so that a large amount of weight can be stacked upon the container (12) and so that heavy weight can be stored therein.

**8.** The method as claimed in any preceding claim, wherein the outlet of the container (12) is positioned on one of the end walls (22, 24).

**9.** The method as claimed in any preceding claim, wherein the flow gate (28) is movably received by guides (42).

**10.** The method as claimed in any preceding claim, wherein one or more other supporting members (38, 40) has one end affixed to a first of the pair of side walls (18, 20) and an opposite end affixed to the other of the pair of side walls (18, 20).

**11.** The method as claimed in claim 10, wherein the one or more other supporting members (38, 40) comprise a plurality of cross members.

**12.** The method as claimed in any preceding claim, further comprising scaling the number of containers (12) for as much or as little proppant as required at the desired location.

**13.** The method as claimed in any preceding claim, further comprising using an inventory control system, wherein each container (12) is bar-coded and logged in to track the amount of proppant on hand by the mesh size of the proppant.

**14.** The method as claimed in any preceding claim, further comprising stacking the plurality of proppant-loaded containers (12) at the desired location.

**15.** The method as claimed in claim 14, wherein up to four containers are positioned in the stack, wherein the stack comprises a first stack, and wherein the method further comprises stacking another plurality of containers (12) that each have proppant therein closely adjacent the first stack.

**16.** The method as claimed in any preceding claim, wherein the longitudinal member (36) is positioned in the interior volume of the container (12).

**16.** The method as claimed in any preceding claim, wherein the plurality of containers (12) that each have proppant therein includes up to four containers (12) which are positioned in a stack, said plurality of containers (12) being arranged to store up to 360,000 pounds of proppant per 160 square feet of footprint.

**17.** The method as claimed in any preceding claim, further comprising unloading a railcar in less than twenty minutes.

**18.** The method as claimed in any preceding claim, further comprising avoiding the mixing of different types of proppant and avoiding contamination of the proppant supply.
